# EUROPEAN PATENT SPECIFICATION

(11) **EP 3 821 487 B1**
(45) Date of publication and mention of the grant of the patent: **07.09.2022**
(21) Application number: 19736384.9
(22) Date of filing: 09.07.2019
(51) Int. Cl.: H01M 4/62, B82Y 30/00, H01M 10/052, H01M 10/056, H01M 10/0565

(54) **FUNCTIONALIZED METAL OXIDE NANOPARTICLES AND PROCESS FOR PREPARNIG THE SAME**
FUNKTIONALISIERTE METALLOXID-NANOPARTIKEL UND PROZESS ZUR HERSTELLUNG DERSELBEN
NANOPARTICULES D'OXYDE MÉTALLIQUE FONCTIONNALISÉ ET PROCÉDÉ POUR LES PRÉPARER

(30) Priority: 10.07.2018 EP 18382515
(43) Date of publication of application: 19.05.2021
(73) Proprietor: Repsol, S.A., 28045 Madrid (ES)
(72) Inventor: NICOLÁS AGUADO, Juan, 28935 MÓSTOLES (ES); PARÍS ESCRIBANO, Rodrigo, 28935 MÓSTOLES (ES); FEDELI, Elisabetta, 20014 DONOSTIA-SAN SEBASTIÁN (ES); GARCÍA CALVO, Oihane, 20014 DONOSTIA-SAN SEBASTIÁN (ES); KVASHA, Andriy, 20014 DONOSTIA-SAN SEBASTIÁN (ES); URDAMPILLETA GONZALEZ, Idoia, 20014 DONOSTIA-SAN SEBASTIÁN (ES)
(74) Representative: ZBM Patents - Zea, Barlocci & Markvardsen
(86) International application number: PCT/EP2019/068335
(87) International publication number: WO 2020/011749

(56) References cited:
- WO-A1-2018/071322
- WO-A2-2013/009731
- CN-A- 102 005 609
- US-B2- 9 142 863
- US-B2- 9 440 849

## Description

### Technical Field

The present invention relates to the field of rechargeable batteries. In particular, it is related to functionalized metal oxide nanoparticles, a solid electrolyte comprising the same, as well as to a battery comprising the solid electrolyte.

### Background Art

Solid electrolyte battery technologies, particularly those that use solid polymer electrolytes, have turned out to be one of the most effective solutions to overcome the safety problems observed in lithium metal batteries with a liquid electrolyte, such as dendrite growth, thermal runaway, flammability, and leakage of the liquid electrolyte.

In this field, among the most used polymers is the poly(ethylene oxide) (PEO), since it is a polymer that has a good capacity to solvate and dissociate high amounts of lithium salt even at room temperature. In addition, the movement of its chains favors the transfer of Li⁺ ions from one electrode to another. However, being a semicrystalline polymer, the ionic conduction is only possible in the molten state (above 60 °C), where the solid matrix loses its mechanical properties and can no longer act as barrier against dendrite growth. Due to the characteristics of PEO, the working temperature of such batteries is generally set between 60 °C and 90 °C.

During the last years, the research has been focused on the improvement of the ionic conductivity of PEO-based solid polymer electrolytes at lower temperatures avoiding the loss of mechanical properties. One of the proposed strategies suggests decreasing the melting temperature and the degree of crystallinity of the PEO matrix by the addition of inorganic nanoparticles (such as alumina, silica, and zirconia). These additives contribute to improving both the mechanical and electrochemical properties of said electrolytes including the ionic conductivity at lower temperatures. The main drawback of this solution is the poor affinity between the inorganic nanoparticles and the organic media, what provokes their macrophase separation and their precipitation during the electrolyte formulation.

In order to improve the affinity of the inorganic nanoparticles with the organic medium, several strategies to functionalize the surface of the nanoparticles have been disclosed in the literature. Among them, the most common is the radial functionalization of the surface of the nanoparticle with different functional groups or with polymer chains. However, with these solutions, only a low percentage of organic fraction (generally around 10-15 wt%) can be grafted to the surface of the nanoparticles. Even anchoring high molecular weight polymers, the low superficial functionalization that is generally achieved doesn't allow obtaining the good performance sought. Additionally, the high price of silanized polymers needed to carry out the functionalization considerably increase the cost of the final product, thus decreasing the interest in a possible industrialization of the process.

US9142863 and US9440849 disclose a nanoparticle organic hybrid material containing an organic polymeric corona wherein the organic polymeric corona is covalently attached to an inorganic nanoparticle core. In both cases, functionalized nanoparticles having lateral/pendant low molecular weight units, not polymer chains, are obtained.

Thus, there is still a need to improve the compatibility between the polymer matrix and the nanoparticles in order to get solid electrolytes with high ionic conductivity at lower working temperature, high mechanical and electrochemical stability that allow achieving lithium batteries with high performance and durability.

### Summary of Invention

The inventors have found that the functionalization of a nanoparticle of a metal oxide selected from the group consisting of Al₂O₃, SiO₂, ZrO₂, TiO₂, MgO, ZnO, BaO, SrO, CaO, and Li₇La₃Zr₂O₁₂ with pendant polymer brushes, such as of polyethylene glycol (PEG), allows anchoring up to 40 wt% of an organic moiety on the nanoparticle's surface. This high percentage of organic moiety grafted onto the surface of the metal oxide nanoparticles allows increasing the compatibility between the polymer matrix and the nanoparticles. Besides, the flexible polymer brushes can facilitate the transport of lithium ions and consequently increase the conductivity of the polymer electrolyte at lower temperatures. Indeed, the presence of inorganic nanoparticles with flexible PEG brushes hinders the crystallization of PEO favoring the formation of a more conductive amorphous phase. Additionally, although having a high organic content, these nanoparticles continue to act as mechanical reinforcement improving the puncture resistance of the electrolyte. This can limit the growth of dendrites, which is one of the main causes of battery failure.

Thus, a first aspect of the invention relates to a functionalized metal oxide nanoparticle, which is a metal oxide nanoparticle having a surface with an organic moiety linked thereto, wherein the organic moiety comprises pendant polymer brushes linked to an organosilane moiety which is anchored to the metal oxide nanoparticle, wherein the metal oxide is selected from the group consisting of Al₂O₃, SiO₂, ZrO₂, TiO₂, MgO, ZnO, BaO, SrO, CaO, and Li₇La₃Zr₂O₁₂;
wherein the polymer forming the polymer brushes is an ion conducting polymer capable to solvate and dissociate an amount of lithium salt such that an ionic conductivity from 1·10⁻² S·cm⁻¹ to 1·10⁻⁹ S·cm⁻¹ at room temperature is obtained; and
wherein the organic moiety linked to the metal oxide nanoparticle is in an amount of up to a 40 wt% with respect to the amount of functionalized nanoparticle.

A second aspect of the invention relates to a process for preparing a functionalized metal oxide nanoparticle as defined herein above and below, the process comprising:
i) reacting a bare metal oxide nanoparticle with an organosilane compound having a reactive functional group of formula (II): wherein 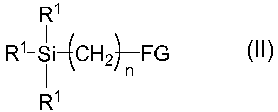
   R¹ is independently selected from (C₁-C₄)alkoxy, -CI;
   n is an integer from 0 to 8; and
   FG is a functional group selected from the group consisting of acrylate, methacrylate, and vinyl,
   in the presence of a polar solvent, in order to obtain a silanized metal oxide nanoparticle having a surface with a reactive functional group attached to it, wherein the metal oxide is selected from the group consisting of Al₂O₃, SiO₂, ZrO₂, TiO₂, MgO, ZnO, BaO, SrO, CaO, and Li₇La₃Zr₂O₁₂; and
ii) subjecting an ion conductive polymer having a polymerizable functional group suitable for radical polymerization attached thereto to a radical polymerization in the presence of a radical initiator and the silanized metal oxide nanoparticle obtained in step i), in the presence of a polar solvent, in order to obtain a functionalized metal oxide nanoparticle as defined herein above and below, wherein the organic moiety linked to the metal oxide nanoparticle is in an amount of up to a 40 wt% with respect to the amount of functionalized nanoparticle; and
   wherein the ion conductive polymer is capable to solvate and dissociate an amount of lithium salt such that an ionic conductivity from 1·10⁻² S·cm⁻¹ to 1·10⁻⁹ S·cm⁻¹ at room temperature is obtained. Particularly, the radical initiator is free in solution.

A third aspect of the invention relates to a solid electrolyte comprising:
- a functionalized metal oxide nanoparticle as defined in the present disclosure;
- a lithium salt as a source of lithium ions;
- an ion conductive polymer matrix.

A fourth aspect of the invention relates to a positive electrode comprising an ionic conductive binder that comprises a functionalized metal oxide nanoparticle as defined herein above and below and an ionic conductive polymer matrix.

A fifth aspect of the invention relates to a lithium battery comprising:
a) a negative electrode;
b) a positive electrode; and
c) a solid electrolyte as defined herein above and below interposed between the cathode and the anode.

Surprisingly, as can be seen from the examples and comparative examples, batteries comprising the solid electrolyte comprising the metal oxide nanoparticle functionalized with pendant polymer brushes as defined in the present disclosure show a surprisingly good electrochemical performance, due to an improved conductivity without having a detrimental effect on the mechanical properties of the solid electrolyte.

### Brief Description of Drawings

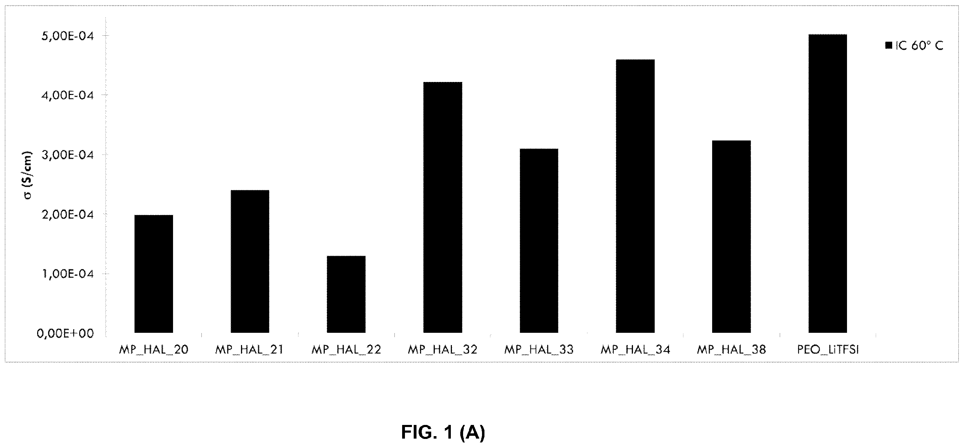

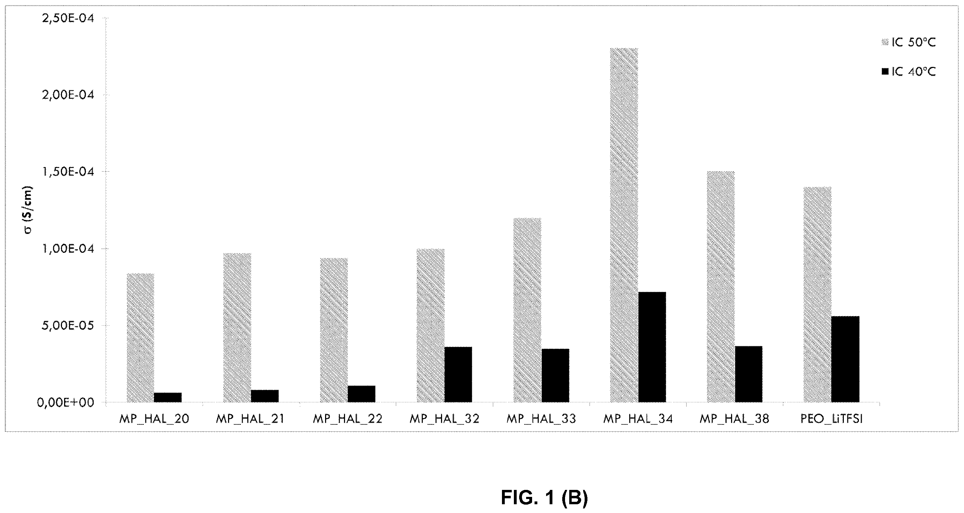

Fig. 1 shows the ionic conductivity data obtained at different temperatures (A: 60 °C; B: 40 °C and 50 °C) of solid electrolytes having bare Al₂O₃ nanoparticles (MP-HAL_20, MP-HAL_21, and MP-HAL_22), of solid electrolytes having Al₂O₃ nanoparticles functionalized with radial PEG chains (MP-HAL_38), and of solid electrolytes having Al₂O₃ nanoparticles with pendant PEG brushes (MP-HAL_32, MP-HAL_33, and MP-HAL_34).

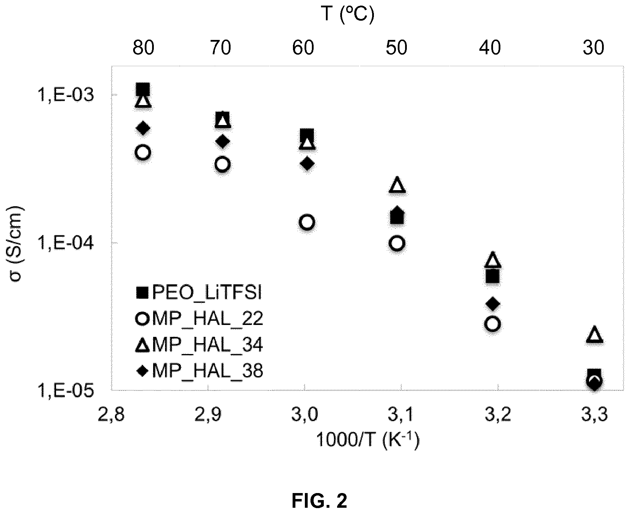

Fig. 2 shows the ionic conductivity data of solid electrolytes: PEO + LiTFSI, PEO + LiTFSI + nano-Al₂O₃ (MP_HAL_22), PEO + LiTFSI + nano-Al₂O₃ functionalized with pendent PEG brushes (MP_HAL_34) and PEO + LiTFSI + nano-Al₂O₃ functionalized with radial PEG chains (MP_HAL_38).

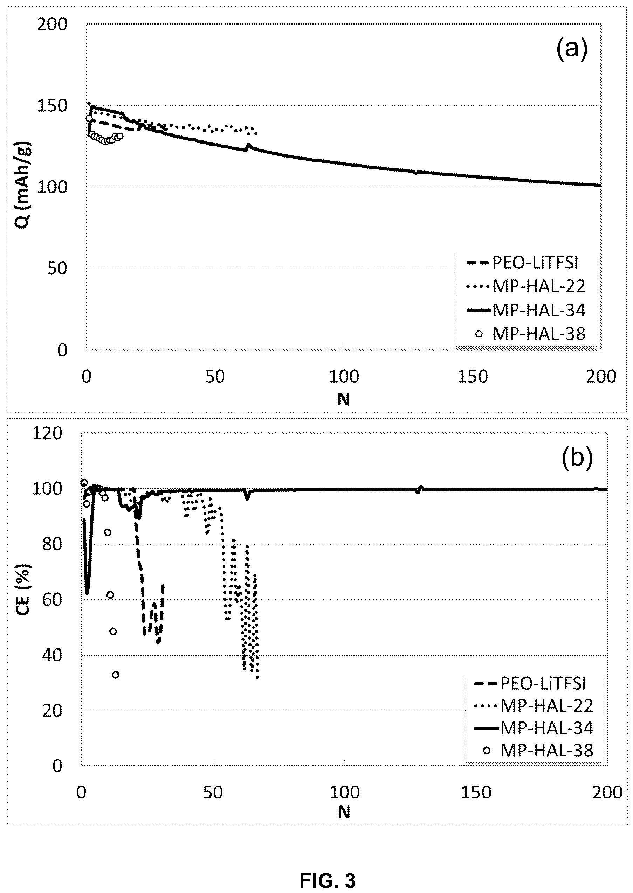

Fig. 3 shows the electrochemical performance of solid state coin cells with different solid electrolytes: (a) specific discharge capacity (Q), (b) coulombic efficiency (CE). Cell description: anode: lithium metal (100 µm), cathode: LiFePO₄ (loading 0.5 mAh/cm²). Cycling conditions: 60 °C, cycling interval 2.5-3.8 V, 0.2C charge current, 0.5C discharge current, 100% depth of discharge (DoD).

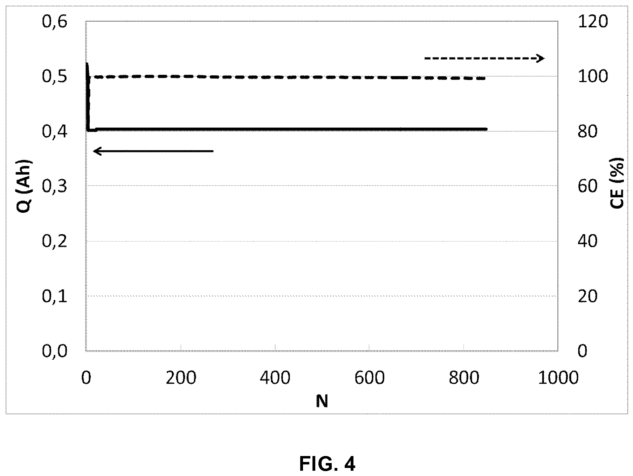

Fig. 4 shows the electrochemical performance of solid state pouch batteries having a solid electrolyte of PEO + LiTFSI + nano-Al₂O₃ functionalized with pendent PEG brushes (MP_HAL_34). Battery description: anode: lithium metal (50 µm), cathode: LiFePO₄ (loading 0.6 mAh/cm²). Cycling conditions: 60 °C, cycling interval 2.5-3.8V, 0.2C charge current, 0.5C discharge current, 80% depth of discharge (DoD).

### Detailed description of the invention

For the sake of understanding, the following definitions are included and expected to be applied throughout the description, claims and drawings.

The terms "particle size", as used herein, is in terms of diameter irrespective of the actual particle shape. The term "diameter", as used herein, means the equivalent sphere diameter, namely the diameter of a sphere having the same diffraction pattern, when measured by laser diffraction, as the particle. The diameter of nanoparticles can be measured by Transmission Electron Microscopy (TEM). TEM measurements can be performed on JEOL 2010 F operating with 200kV accelerating voltage. The characterization of nanoparticles can be made by deposition of a drop of highly diluted (0.1 mg/ml) nanoparticle dispersion in heptane onto a Formvar coated grid, stabilized with evaporated carbon film, FCF300-Cu-25 grid from Electron Microscopy Science. The sizes of pitch, hole and bar are 84, 61, and 23 µm, respectively (300 mesh). Average size and size distribution can be calculated by measuring the dimensions of a representative amount of nanoparticles by this technique. Image processing software packages are used to quantify particle size and size distribution. An example of such a software is Pebbles (cf. S. Mondini, et al., "PEBBLES and PEBBLEJUGGLER: software for accurate, unbiased, and fast measurement and analysis of nanoparticle morphology from transmission electron microscopy (TEM) micrographs", Nanoscale, 2012, 4, 5356-5372).

As used herein, the term "ion conductive polymer" means a polymer capable to solvate and to dissociate an amount of lithium salt such that an ionic conductivity of the mixture polymer-salt from 1·10⁻² S·cm⁻¹ to 1·10⁻⁹ S·cm⁻¹ at room temperature is obtained. Ionic conductivity is as measured by Electrochemical Impedance Spectroscopy (EIS). According to this measuring method, symmetrical coin cells (2025) with blocking stainless steel electrodes (SS) were employed. A 20 mV sinusoidal amplitude was applied in the 1 MHz - 1 Hz frequency range at different temperatures from 80 °C to 30 °C every 10 °C. The tests were performed using a dynamic climatic chamber. The cells were allowed to stabilize 1 hour at each temperature before the measurement. EIS spectra were fitted using ZView software 3.5 (Scribner). For each solid electrolyte membrane, three cells were assembled to guarantee the good reproducibility of the results.

As used herein, the term "polymer brush" refers to a linear polymer in which the backbone is grafted with pendant polymer chains (cf. Figure 1C in Gregory, A., Stenzel, M. H. " Complex polymer architectures via RAFT polymerization: From fundamental process to extending the scope using click chemistry and nature's building blocks", Progress in Polymer Science, 2012, Vol. 37(1), pp. 38-105).

As used herein, the term "organic moiety" refers to the pendant polymer brushes including the organosilane moiety to which they are linked, namely everything that is anchored to the bare metal oxide nanoparticle.

The term "(C₁-C₄)alkoxy" refers to a -O-(C₁-C₄)alkyl group, where (C₁-C₄)alkyl" refers to a lineal or branched aliphatic chain radical that has from 1 to 4 carbon atoms. Examples of (C₁-C₄)alkyl are methyl, ethyl, n-propyl, iso-propyl, n-butyl, iso-butyl, sec-butyl, and tert-butyl. Particularly, the (C₁-C₄)alkoxy is methoxy or ethoxy.

The term "room temperature" refers to a temperature from about 20 °C to 25 °C.

All percentages used herein are by weight of the total composition, unless otherwise designated.

As used herein, the indefinite articles "a" and "an" are synonymous with "at least one" or "one or more". Unless indicated otherwise, definite articles used herein, such as "the", also include the plural of the noun.

As mentioned above, a first aspect relates to a functionalized metal oxide nanoparticle which is a metal oxide nanoparticle having pendant polymer brushes that are anchored to the metal oxide nanoparticle through an organosilane moiety. Particularly, the metal oxide is alumina (Al₂O₃).

Metal oxide nanoparticles are commercially available (US Research Nanomaterials), also within the mentioned particle size ranges. Additionally, the metal oxide nanoparticles can be obtained by known mechanical methods, such as milling and/or sieving, or by chemical methods, such as precipitation, metal evaporation, laser pyrolysis, gas phase methods and plasma-chemical reduction method. In a particular case, metal oxide nanoparticles with controlled size and shape can be synthesized by adding basic solutions (KOH, NaOH) into a metallic salt precursor solution in the required concentrations to obtain the desired dimensions. Depending on the metal cation, metal oxide nanoparticles can be obtained directly. However, in some cases further annealing treatment is required to induce the transitions from the formed phase into the metal oxide nanoparticle. These methods are widely known and use commonly available equipment.

Metal oxide nanoparticles can be functionalized by attaching different organic compounds on their surface, in order to gain additional physicochemical properties such as improved dispersibility and conductivity.

In an embodiment, the functionalized metal oxide nanoparticle of the present disclosure is represented by a structure of formula (I): 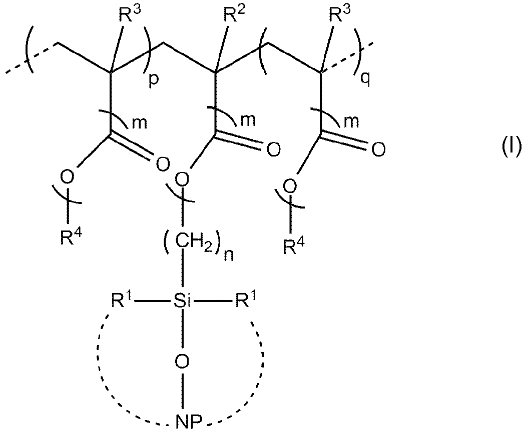 wherein NP is a metal oxide nanoparticle, wherein the metal oxide is selected from the group consisting of Al₂O₃, SiO₂, ZrO₂, TiO₂, MgO, ZnO, BaO, SrO, CaO, and Li₇La₃Zr₂O₁₂;
R¹ is independently a radical selected from (C₁-C₄)alkoxy and -CI, or alternatively, is a biradical which is -O- attached to the nanoparticle, and the dashed line (- - - -) means a bond when R¹ is a biradical;
R² and R³ are independently selected from -CH₃ and -H;
R⁴ is an ion conducting polymer chain, wherein the ion conducting polymer is a polymer capable to solvate and dissociate an amount of lithium salt such that an ionic conductivity from 1·10⁻² S·cm⁻¹ to 1·10⁻⁹ S·cm⁻¹ at room temperature is obtained;
n is an integer from 0 to 8; m is independently selected from an integer from 0 to 1; and
q and p are equal or different and are such that the organic moiety in the final functionalized metal oxide nanoparticle is in an amount from 10 wt% to 40 wt%, from 20 wt% to 40 wt%, or from 30 wt% to 40 wt%, with respect to the amount of functionalized nanoparticle; and
wherein the functionalized metal oxide nanoparticle represented by formula (I) has one or more anchored organosilane moieties to which pendant polymer brushes are linked.

Although the organic moiety linked to the metal oxide nanoparticle is represented in formula (I) by an anchored organosilane moiety to which the pendant polymer brush is linked, it is to be understood that one or more of these anchored pendant polymer brushes linked to an organosilane moiety can be present in the final functionalized metal oxide nanoparticle and their number will be determined by steric hindrance.

Additionally, as represented by the dashed line at the ends of the polymeric chain in formula (I) and as inferred from the process carried out to prepare the functionalized metal oxide nanoparticle of the present disclosure, the pendant polymer brushes can be linked to more than one organosilane moieties, wherein each one of them can be anchored to a different metal oxide nanoparticle. Thus, in a particular embodiment of the functionalized metal oxide nanoparticle of the present disclosure, at least one of the pendant polymer brushes is linked to at least two organosilane moieties, each one of the organosilane moieties being anchored to a different metal oxide nanoparticle.

Thus, also forms part of the invention a combination of a) a functionalized metal oxide nanoparticle wherein the pendant polymer brushes are linked to organosilane moieties anchored to the same metal oxide nanoparticle and b) a functionalized metal oxide nanoparticle wherein at least one of the pendant polymer brushes is linked to at least two organosilane moieties wherein each one of the organosilane moieties are anchored to a different metal oxide nanoparticle.

In a particular embodiment of the functionalized nanoparticle of the present disclosure, the metal oxide is Al₂O₃, the R¹ is methoxy or a biradical which is -O- attached to the nanoparticle, R² is -CH₃, R³ is -H, n is 3; m is 1. Particularly, q and p are equal or different and are such that the organic moiety in the final functionalized metal oxide nanoparticle is in an amount from 30 wt% to 40 wt% with respect to the amount of functionalized nanoparticle.

In another embodiment, optionally in combination with one or more features of the particular embodiments defined above, the ion conducting polymer used to form the pendant polymer brushes anchored to the metal oxide nanoparticle is selected from the group consisting of poly(ethylene oxide); poly(propylene oxide); a poly(ionic liquid) composed by a quaternary amine, a pyrrolidinium or an imidazolium cation coordinated with a bis(trifluoromethane)sulfonimide (TFSI⁻) or a bis(fluorosulfonyl)imide (FSI⁻) anion; a polyalkylencarbonate; and mixtures thereof, and copolymers thereof. Particularly, the ion conducting polymer is poly(ethylene oxide) or poly(propylene oxide). Polymers mentioned above are commercially available.

In particular, polyalkylencarbonates are polymers showing ether and carbonate units. They can be prepared by copolymerization of one or more epoxides with CO₂. Examples of polyalkylene carbonates include, without being limited to, polyethylene carbonate (obtainable by copolymerization of ethylene oxide and carbon dioxide), polycyclohexylene carbonate (obtainable by copolymerization of cyclohexene oxide and carbon dioxide), and polypropylene carbonate (obtainable by copolymerization of propylene oxide and carbon dioxide).

In another embodiment, optionally in combination with one or more features of the particular embodiments defined above, the amount of organic moiety linked to the metal oxide nanoparticle is from 10 wt% to 40 wt%, from 20 wt% to 40 wt%, or from 30 wt% to 40 wt% with respect to the amount of functionalized nanoparticle. The amount of of organic moiety linked to the metal oxide nanoparticle can be determined by thermogravimetric analysis (TGA) such as by using a TA instrument Q500 employing an aluminum pan with a small amount of sample (3-5 mg), and recording the experiments in dynamic conditions under nitrogen atmosphere heating at a rate of 10 °C/min from 30 °C to 800 °C.

The anchoring takes place, usually but not limited to, through covalent bonding created between the metal oxide and certain groups such as silane groups, which are part of an organic molecule (cf. M. A. Neouze and U. Schubert "Surface Modification and Functionalization of Metal and Metal Oxide Nanoparticles by Organic Ligands" Monatsh Chem, 2008, Vol. 139, pp. 183-195). Examples of typical routes to functionalize nanoparticles lie on the dissolution of an organosilane into a solvent, disperse the nanoparticles into the solution and keep the system stirring for a certain time to let the surface of the nanoparticle be coated by the organosilane. The process may require further procedures such as filtering, purification and/or temperature or ultrasonication treatments to obtain the final purified product.

By simply exposure to water or air, -OH groups are formed on the surface of metal oxide nanoparticles, particularly of alumina (Al₂O₃) nanoparticles. Therefore, -OH groups will always be present on the surface of metal oxide nanoparticles without special surface treatment being needed.

Thus, as mentioned above, the functionalization of the metal oxide nanoparticle can be carried out in two simple reaction steps. In a first step i), bare metal oxide particles are reacted with an organosilane having in its structure a reactive functional group which is a polymerizable functional group, in the presence of a polar solvent. The reaction can be carried out at reflux temperature. Thus, a silanized nanoparticle having a reactive functional group which is a polymerizable functional group attached to its surface is obtained. This silanized nanoparticle having a polymerizable functional group is a sort of co-monomer that takes part in the polymerization reaction together with the ion conductive polymer having a polymerizable functional group suitable for radical polymerization attached thereto.

Then, in a second step ii), the silanized metal oxide nanoparticle is reacted, i.e. copolymerized, with an ion conductive polymer having a polymerizable functional group suitable for radical polymerization attached thereto in order to bond pendant polymer brushes in the surface of the silanized nanoparticle. This last step is carried out by means of radical polymerization in the presence of a radical initiator such as a thermal initiator or a photoinitiator, and of a polar solvent. The radical initiator is added as free reagent in solution. The resulting material is composed by metal oxide nanoparticles that are functionalized with long polymer chains with pendant ionic conductive polymeric brushes grafted on the main backbone. As mentioned above, the metal oxide nanoparticles can be linked to each other through some of the mentioned long brushed polymer chains. The use of such architecture is considered a much more practical, easily tunable and economical alternative to common radial functionalized metal oxide nanoparticles that generally requires the use of specific, expensive and not always commercially available organosilane polymers.

Examples of polar solvents are, without being limited to, tetrahydrofuran, methanol, ethanol, propanol, isopropanol, water, ethyl acetate, dichloromethane, acetonitrile, dimethylformamide, dimethyl sulfoxide, and acetone.

Depending on the nature of the monomer, the initiator and the type of radical polymerization, the reaction can be carried out at a temperature from 25 °C to 120 °C, with or without irradiation at wavelength from 180 nm to 800 nm. Particularly, when a thermal initiator is used the radical polymerization is carried out at a temperature from 60 °C to 120 °C, and when a photoinitiator is used the reaction is carried out at room temperature with irradiation at at wavelength from 180 nm to 800 nm.

The suitable polymer has to be able to solvate and dissociate a large amount of lithium salt in order to get an ionic conductivity in the solid electrolyte between 1·10⁻² S·cm⁻¹ and 1·10⁻⁹ S·cm⁻¹ at room temperature.

The bare metal oxide nanoparticles can have an average diameter from 1 nm to 100 nm, from 1 nm to 50 nm, or from 1 nm to 10 nm. Particularly, they have a sharp particle size distribution.

In an embodiment of the process of the present disclosure, the ion conductive polymer is selected from poly(ethylene oxide); polypropylene oxide); a poly(ionic liquid) composed by a quaternary amine, a pyrrolidinium or an imidazolium cation coordinated with a bis(trifluoromethane)sulfonimide (TFSI⁻) or a bis(fluorosulfonyl)imide (FSI⁻) anion; a polyalkylencarbonate; and mixtures thereof, and copolymers thereof;
and the polymerizable functional group suitable for radical polymerization is selected from the group consisting of methacrylate, acrylate, and vinyl.

Particularly, ion conductive polymers having a polymerizable functional group suitable for radical polymerization attached thereto is selected from the group consisting of poly(ethylene glycol)-methyl ether acrylate (PEGMEA), poly(ethylene glycol) methyl ether methacrylate (PEGMEMA), N,N,N,N-butyldimethylmethacryloyloxiethylammonium bis(trifluoromethylsulfonyl)imide, 3-ethyl-1-vinylimidazolium bis(trifluoromethylsulfonyl)imide, 3-ethyl-1-vinylimidazolium bis(fluoromethylsulfonyl)imide. More particularly, the ion conductive polymers having a polymerizable functional group suitable for radical polymerization attached thereto is poly(ethylene glycol) methyl ether acrylate (PEGMEA), or poly(ethylene glycol) methyl ether methacrylate (PEGMEMA). Even more particularly, the polymer having a polymerizable functional group is PEGMEA, such as poly(ethylene glycol) methyl ether acrylate Mn 480 g/mol.

In another embodiment of the process of the present disclosure, optionally in combination with one or more features of the particular embodiments defined above, the amount of organic moiety linked to the metal oxide nanoparticle is from 10 wt% to 40 wt%, from 20 wt% to 40 wt%, or from 30 wt% to 40 wt% with respect to the amount of functionalized nanoparticle.

Examples of organosilane compounds having a polymerizable moiety can be represented by the following formula (II): 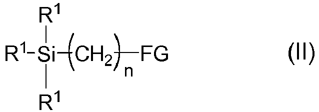 wherein
R¹ is independently selected from (C₁-C₄)alkoxy and Cl;
n is an integer from 0 to 8; and
FG is a functional group selected from the group consisting of acrylate, methacrylate, and vinyl.

Examples of suitable organosilanes having a polymerizable moiety are, without being limited to, (trimethoxysilyl)propyl methacrylate, (trimethoxysilyl)propyl acrylate, allyltrichlorosilane, trichlorovinylsilane, allyltriethoxysilane, allyltrimethoxysilane, diethoxy(methyl)vinylsilane, dimethoxymethylvinylsilane, octenyltrichlorosilane, 3-(trichlorosilyl)propyl methacrylate, triethoxyvinylsilane, trimethoxy(7-octen-1-yl)silane, vinyltrimethoxysilane. In an embodiment, optionally in combination with one or more features of the particular embodiments defined above, the organosilane is (trimethoxysilyl)propyl methacrylate.

Particularly, the amount of organosilane compound used to carry out step i) is in a weight ratio from 1.1:1 to 3:1, such as 2:1, with respect to the amount of metal oxide nanoparticles.

Also particularly, the amount of organosilane in the silanized metal oxide nanoparticles is from 1 wt% to 15 wt%, particularly from 8 wt% to 10 wt% with respect to the amount of silanized metal oxide nanoparticles.

Examples of thermal initiators for radical polymerization are, without being limited to, azo-compounds such as 2-2'-azobis(2-methylpropionitrile) (AIBN), inorganic peroxides such as ammonium persulfate, organic peroxides such as tert-butyl peroxide, tert-butyl peroxybenzoate, dicumyl peroxide, organic photoinitiators such as benzophenone, nitroxide-mediated radical polymerization (NMP) initiators such as (2,2,6,6-tetramethylpiperidin-1-yl)oxyl or (2,2,6,6-tetramethylpiperidin-1-yl)oxidanyl (TEMPO), atom transfer radical polymerization (ATRP) initiators such as alkyl halides, or reversible addition-fragmentation chain transfer (RAFT) initiators such as dithiobenzoates, trithiocarbonates, dithiocarbamate, and xanthanates.

In an embodiment of the process for functionalizing the metal oxide nanoparticle, the bare metal oxide nanoparticle is an Al₂O₃ nanoparticle, the organosilane having a polymerizable moiety is (trimethoxysilyl)propyl methacrylate, and the polymers having a polymerizable functional group is a poly(ethylene oxide) having a polymerizable functional group selected from the group consisting of methacrylate, acrylate, and vinyl, particularly PEGMEA.

In still another particular embodiment, optionally in combination with one or more features of the particular embodiments defined above, the amount of polymer having a polymerizable functional group is in a weight ratio from 1.1:1 to 3:1 with respect to the amount of silanized metal oxide nanoparticles, and the amount of radical initiator is from 0.1 wt% to 5 wt% with respect to the amount of silanized metal oxide nanoparticle.

A functionalized metal oxide nanoparticle obtainable by the process mentioned above also forms part of the invention. Thus, it also forms part of the invention a functionalized metal oxide nanoparticle obtainable by a process comprising:
i) reacting a bare metal oxide nanoparticle with an organosilane compound having a reactive functional group of formula (II): 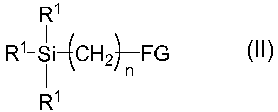 wherein
   R¹ is independently selected from (C₁-C₄)alkoxy, -CI;
   n is an integer from 0 to 8; and
   FG is a functional group selected from the group consisting of acrylate, methacrylate, and vinyl,
   in the presence of a polar solvent, in order to obtain a silanized metal oxide nanoparticle having a surface with a reactive functional group attached to it, wherein the metal oxide is selected from the group consisting of Al₂O₃, SiO₂, ZrO₂, TiO₂, MgO, ZnO, BaO, SrO, CaO, and Li₇La₃Zr₂O₁₂; and
ii) subjecting an ion conductive polymer having a polymerizable functional group suitable for radical polymerization attached thereto to a radical polymerization in the presence of a radical initiator and the silanized metal oxide nanoparticle obtained in step i), in the presence of a polar solvent, in order to obtain a functionalized metal oxide nanoparticle as defined above;
   wherein the organic moiety linked to the metal oxide nanoparticle is in an amount of up to a 40 wt% with respect to the amount of functionalized nanoparticle; and
   wherein the ion conductive polymer is capable to solvate and dissociate an amount of lithium salt such that an ionic conductivity from 1·10⁻² S·cm⁻¹ to 1·10⁻⁹ S·cm⁻¹ at room temperature is obtained. Particularly, the radical initiator is free in solution;

All particular embodiments of the process are also particular embodiments of the functionalized metal oxide nanoparticle obtainable by said process.

In an embodiment, the functionalized metal oxide nanoparticle is represented by a structure of formula (I): 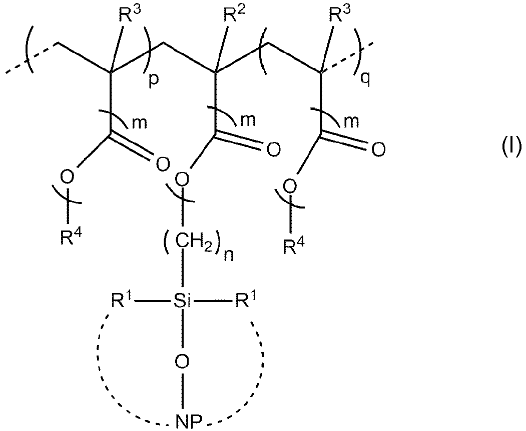 wherein NP is a metal oxide nanoparticle, wherein the metal oxide is selected from the group consisting of Al₂O₃, SiO₂, ZrO₂, TiO₂, MgO, ZnO, BaO, SrO, CaO, and Li₇La₃Zr₂O₁₂;
R¹ is independently radical selected from (C₁-C₄)alkoxy and -CI, or alternatively, is a biradical which is -O- attached to the nanoparticle, and the dashed line (- - - -) means a bond when R1 is a biradical;
R² and R³ are independently selected from -CH₃ and -H;
R⁴ is an ion conducting polymer chain, wherein the ion conducting polymer is a polymer capable to solvate and dissociate an amount of lithium salt such that an ionic conductivity from 1·10⁻² S·cm⁻¹ to 1·10⁻⁹ S·cm⁻¹ at room temperature is obtained;
n is an integer from 0 to 8; m is independently selected from an integer from 0 to 1; and
q and p are equal or different and are such that the organic moiety in the final functionalized metal oxide nanoparticle is in an amount from 10 wt% to 40 wt% with respect to the amount of functionalized nanoparticle; and
wherein the functionalized metal oxide nanoparticle represented by formula (I) has one or more anchored organosilane moieties to which pendant polymer brushes are linked.

### Preparation of the solid electrolyte

As mentioned above, an aspect of the invention relates to a solid electrolyte comprising a functionalized metal oxide nanoparticle as defined in the present disclosure; a lithium salt as a source of lithium ions; and an ion conductive polymer matrix.

In order to prepare the solid electrolyte, functionalized metal oxide nanoparticles according to the present disclosure are homogenously dispersed in an electrolytic medium containing a solvent, the lithium salt and, wherein, later after, an ion conductive polymer is added under stirring, particularly by mechanical agitation, in order to get a homogeneous dispersion. This dispersion will be used to get the solid electrolyte, for instance, by casting it with a Doctor Blade on a suitable support such as a Teflon sheet, and removing the solvent by evaporation. Nanoparticles with different superficial functionalization can be mixed in the ionic conductive polymer matrix.

In an embodiment of the solid electrolyte, the amount of metal oxide particles in the solid electrolyte is from 0.5 wt% to 20 wt%, particularly from 5 wt% to 15 wt%, more particularly 10 wt%, with respect to the total amount of functionalized metal oxide nanoparticles, lithium salt, and ion conductive polymer.

In another embodiment, optionally in combination with one or more features of the particular embodiments defined above, the lithium bis(trifluoromethane)sulfonimide (LiTFSI), lithium bis(fluorosulfonyl)imide (LiFSI), lithium bis(oxalato)borate (LiB(C₂O₄)₂ or LiBOB), lithium trifluoromethane sulfonate (lithium triflate or LiCF₃O₃S), LiNO₃, LiBF₄, LiClO₄, lithium bis(perfluoroethanesulfonyl)imide (LiBETI), and combinations thereof.

In still another embodiment, optionally in combination with one or more features of the particular embodiments defined above, the amount of lithium salt in the solid electrolyte is from 10 wt% to 35 wt%, particularly from 15 wt% to 25 wt%, with respect to the total amount of functionalized metal oxide nanoparticles, lithium salt, and ionic conductive polymer.

Examples of ion conductive polymers forming the ion conductive polymer matrix are, without being limited to, poly(ethylene oxide), poly(propylene oxide), poly(methyl methacylate), poly(diallyldimethylammonium bis(fluorosulfonyl)imide), poly(diallyldimethylammonium bis(trifluoromethanesulfonyl)imide), poly(ethylene carbonate), poly(propylene carbonate), lithium poly(styrene sulfonate), and mixtures or copolymers thereof, or copolymers thereof with polystyrene or polyacrilonitrile. Particularly, the ionic conductive polymer is poly(ethylene oxide) of 600,000 g/mol.

In an embodiment, optionally in combination with one or more features of the particular embodiments defined above, the amount of ion conductive polymer in the solid electrolyte is from 86 wt% to 45 wt%, particularly from 80 wt% to 60 wt%, with respect to the total amount of functionalized metal oxide nanoparticles, lithium salt, and ionic conductive polymer.

In a more particular embodiment, optionally in combination with one or more features of the particular embodiments defined above, the amount of ionic conductive polymers is from 78 wt% to 65 wt%, the amount of lithium salt is from 20 wt% to 25 wt%, and the amount of functionalized metal oxide nanoparticles is from 2 wt% to 10 wt%, with respect to the total amount of the three components.

As the mentioned, functionalized metal oxide nanoparticles are used in the process for the preparation of the solid electrolyte disclosed herein, the above mentioned amounts of nanoparticles, particle sizes, and particular inorganic particles also define particular embodiments of the process for the preparation of the solid electrolyte.

The processes of the present disclosure have several advantages such as the simplicity of the method for synthesizing the functionalized metal oxide nanoparticles, and the low cost and scalability of the process for the preparation of the solid electrolyte.

As mentioned above, a fourth aspect of the invention relates to a lithium battery comprising an anode, a cathode, and a solid electrolyte as defined herein above interposed between the cathode and the anode. In an embodiment, the anode is lithium metal. In another embodiment, the anode is a graphite anode.

Throughout, the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention.

The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### Examples

### Materials and equipment

Lithium bis(trifluoromethanesulfonyl)imide (LiTFSI) was purchased from Solvionic (>99%); alumina nanoparticles, average particle size: 5 nm, purity: 99.99%, from US Research Nanoparticles Inc.; (trimethoxysilyl)propyl methacrylate (MPS) from Alfa Aesar; 2,2'-azobis(2-methylpropionitrile) from Acros Organics; and poly(ethylene glycol) methyl ether acrylate Mn 480 g/mol (PEGMEA) from Aldrich.

Thermogravimetric analysis (TGA) was carried out with a TA instrument Q500 employing an aluminum pan with a small amount of sample (3-5 mg). The experiments were recorded in dynamic conditions under nitrogen atmosphere heating at a rate of 10 °C/min from 30 °C to 800 °C.

### Example 1 - Preparation of functionalized Al₂O₃ nanoparticles (Al-NP-PEG₄₈₀)

### a) Functionalization of Al₂O₃ nanoparticles surface with MPS (Al₂O₃-MPS)

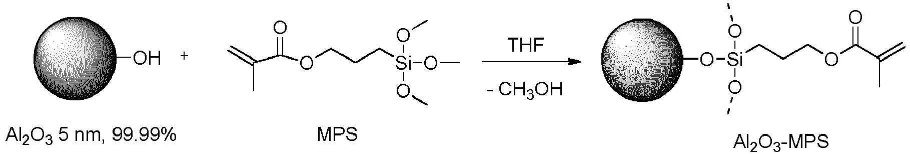

In a three-necks round bottom flask, (trimethoxysilyl)propyl methacrylate (MPS) and bare Al₂O₃ nanoparticles of 5 nm diameter (dried at 120 °C overnight prior to use) in 0.5:1 weight ratio were stirred in tetrahydrofuran (THF) at reflux temperature under nitrogen atmosphere overnight. The suspension was centrifuged and the liquid fraction was removed and fresh THF was added. The mixture was again centrifuged. The washing procedure was repeated three times in order to remove residual MPS. The solid nanoparticles were dried overnight at 60 °C under reduced pressure. The amount of anchored organosilane moiety was evaluated by TGA.

### b) Functionalization of Al₂O₃ nanoparticles surface with pendant polyethylene glycol brushes (Al-NP-PEG₄₈₀)

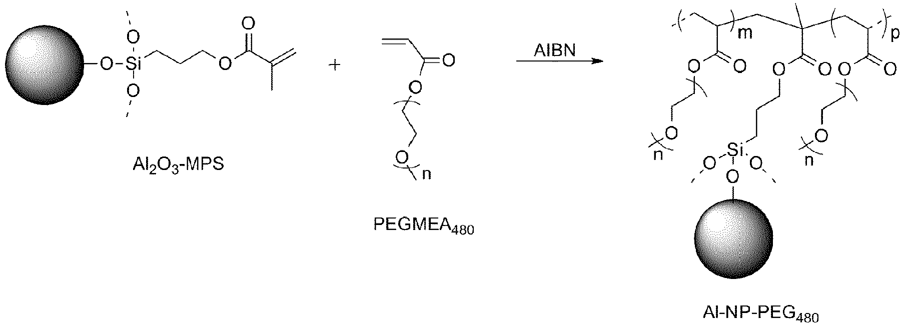

The reaction was performed in a three-neck round bottom flask equipped with condenser under nitrogen atmosphere and at reflux temperature. Al₂O₃ nanoparticles previously silanized with MPS as disclosed in step a) were stirred with poly(ethylene glycol) methyl ether acrylate Mn 480 g/mol (PEGMEA) in weight ratio 1:2 compared to silanized aluminum oxide nanoparticles in THF at room temperature while bubbling nitrogen. After 1 hour, 1 wt% of 2,2'-azobis(2-methylpropionitrile) (AIBN) was added and the temperature was raised until a reflux was observed (around 88 °C). The mixture was stirred overnight and, subsequently, the nanoparticles were centrifuged and washed with fresh THF to eliminate residual reagents and undesired by-products. The obtained Al₂O₃ nanoparticles functionalized with pendant PEG brushes (Al-NP-PEG₄₈₀) were dried at 60 °C under reduced pressure for 24 hours and stored in a dry room before use. The amount of organic moiety anchored to the surface of the nanoparticles was evaluated by TGA and resulted to be about 40 wt%.

It should be noted that the functionalization process of nanoparticles used to prepare Al_NP_PEG₄₈₀ is a simple method (uncontrolled radical polymerization), economical, reproducible and scalable. With common laboratory material (1L three-neck round bottom flask), 60 grams of functionalized nanoparticles were synthesized. This amount of functionalized nanoparticles allows obtaining 600 g of electrolyte comprising a 10 wt% Al_NP_PEG₄₈₀ (see MP_HAL_34 in Table 1 below) corresponding to more than 8 m² of a 55 µm thick membrane, which allows the preparation of several pouch-type cells with a nominal capacity of 0.5 Ah, a very relevant aspect for industrial exploitation.

### Example 2 - Preparation of a solid electrolyte

Lithium bis(trifluoromethanesulfonyl)imide (LiTFSI) was dissolved in corresponding amount of acetonitrile in a beaker. The amount of solvent was calculated to obtain a final electrolyte solution in which the solids were at 12 wt% in acetonitrile. Then, functionalized Al₂O₃ nanoparticles obtained in Example 1 were added and stirred with a mechanical stirrer (Heidolph, RZR 2021, 2000 rpm) for 30 minutes to favor a proper dispersion in solution. Poly(ethylene oxide) (Mn 6·10⁵ g/mol) was slowly added. The mixture was stirred for 5 hours resulting in a white homogeneous dispersion. The dispersion was maintained without stirring for 1 hour before casting. Self-standing membranes were obtained by solvent casting method over a Teflon sheet employing a Doctor Blade. The casted membranes were allowed to evaporate at 35 °C for 2 hours before being dried under reduced pressure at 60 °C. All the membranes were stored in sealed pouch bags in a dry room. Electrolytes with different amounts of nanoparticles were prepared (see Example 3 below).

### Comparative Examples 1 - Synthesis of alumina nanoparticles functionalized with radial poly(ethylene glycol) chains

In a round bottom flask, (triethoxysilyl)propyl poly(ethylene glycol)methyl ether (PEO11_MPS, Mn 721 g/mol, purchased from Specific Polymers) and Al₂O₃ nanoparticles of 5 nm diameter (dried at 120 °C overnight prior to use) were stirred overnight in dry THF at reflux temperature. The suspension was centrifuged at 3500 rpm for 30 minutes. The liquid fraction was removed and fresh THF was added to wash the precipitate. The mixture was again centrifuged. The procedure was repeated three times in order to remove free PE011_MPS. The solid nanoparticles were dried overnight at 60 °C under reduced pressure. The amount of anchored organic moiety was evaluated by TGA and the maximum content was 11 wt%.

### Comparative Example 2 - Preparation of a solid electrolyte comprising alumina nanoparticles functionalized with radial poly(ethylene glycol) chains (MP HAL 38)

LiTFSI was dissolved in acetonitrile in a beaker. The amount of solvent was calculated to obtain a final electrolyte solution in which the solids were at 12 wt% in acetonitrile. Then, Al₂O₃ nanoparticles functionalized with radial poly(ethylene glycol) obtained in Comparative Example 1 were added in the amount necessary to obtain a hybrid electrolyte with 10 wt% of radially functionalized nanoparticles. The mixture was stirred with a mechanical stirrer (Heidolph, RZR 2021, 2000 rpm) for 30 minutes to favor a proper dispersion in solution. Poly(ethylene oxide) (Mn 6·10⁵ g/mol) was slowly added. The mixture was stirred for 5 hours resulting in a white homogeneous dispersion. The dispersion was maintained without stirring for 1 hour before use in order to eliminate air bubbles. Then, it was casted using a Doctor Blade. The casted membrane was dried to open air to remove the solvent. The membrane was dried overnight at 60 °C under reduced pressure, and then stored in sealed pouch in dry room. An electrolyte (MP-HAL_38) with 68 wt% of PEO 6·10⁵ g/mol, 22 wt% of LiTFSI, and 10 wt% Al₂O₃ functionalized with radial PEO (8.9 wt% real content of Al₂O₃) prepared (see Example 4 below).

### Example 3 - Comparative data of ionic conductivity

In order to carry on a comparative study, several solid electrolytes with different inorganic load percentage (2, 5, and 10 wt%) and with nanoparticles with and without surface functionalization were prepared. In Table 1 below the composition of the different assessed solid electrolytes is shown.

**Table 1**

| Electrolyte | PEO 6·10⁵ g/mol | LiTFSI | Type of nanoparticle | | |
|---|---|---|---|---|---|
| | | | Non functionalized Al₂O₃ (5 nm) | Al_NP_PEG₄₈₀ *(real content of Al₂O₃) (a)* | Al₂O₃ functionalized with radial PEO *(real content of Al₂O₃)(b)* |
| | wt% | | | | |
| MP-HAL_20 | 75 | 23 | 2 | | |
| MP-HAL_21 | 73 | 22 | 5 | | |
| MP-HAL_22 | 68 | 22 | 10 | | |
| MP-HAL_32 | 75 | 21 | | 2 (1.2) | |
| MP-HAL_33 | 73 | 22 | | 5 (3) | |
| MP-HAL_34 | 68 | 22 | | 10 (6) | |
| MP-HAL_38 | 68 | 22 | | | 10 (8.9) |
| PEO_LiTFSl | 75 | 25 | | | 0 |

| | | | | | |
|---|---|---|---|---|---|
| (a) The wt% of Al_NP_PEG₄₈₀ nanoparticles added consists of 60 wt% of alumina (the actual percentage of inorganic content is reported in parentheses) and 40 wt% of polymer based on PEG₄₈₀; (b) 10 wt% of nanoparticles functionalized with radial PEG₄₈₀ is composed of 89 wt% of alumina and 11 wt% of PEG₄₈₀. | | | | | |

Electrolytes MP-HAL_32, MP-HAL_33, and MP-HAL_34 were prepared following the process of Example 2. Electrolyte MP-HAL_38 was prepared following the process of Comparative Example 2. Electrolytes MP-HAL_20, MP-HAL_21, and MP-HAL_22 were obtained following a similar process as disclosed in Example 2, but with bare Al₂O₃ nanoparticles, i.e. non-functionalized Al₂O₃.

### Ionic conductivity measurement

Ionic conductivity was measured by Electrochemical Impedance Spectroscopy (EIS) using AUTOLAB PGSTAT30. Symmetrical coin cells (2025, Hohsen) with blocking stainless steel electrodes (SS) were employed. A 20 mV sinusoidal amplitude was applied in the 1 MHz - 1 Hz frequency range at different temperatures from 80 °C to 30 °C every 10 °C. The tests were performed using a dynamic climatic chamber Binder MK53 (Germany). The cells were allowed to stabilize 1 hour at each temperature before measurement. EIS spectra were fitted using ZView software 3.5 (Scribner). For each solid electrolyte membrane, three cells were assembled to guarantee the good reproducibility of the results.

Currently, commercially available lithium metal batteries using polymer solid electrolytes operate at temperatures between 60 °C and 90 °C. With the aim of developing a battery having an improving performance, particularly at low temperatures, first electrolytes having good properties at 60 °C were chosen and subsequently essayed at lower temperatures (40 °C and 50 °C).

Graph A of Figure 1 reports the conductivity data at 60 °C. At this temperature all the electrolytes were around or above their melting temperature, as shown by differential scanning calorimetry (DSC), as shown in Table 2 below.

**Table 2**

| Sample | EO (wt. %) | Tₘ (°C) | ΔH (J/g) | ΔH (J/g_{EO}) | X_{c} (%) |
|---|---|---|---|---|---|
| PEO 6·10⁵ g/mol | 100 | 66 | 92.4 | 92.4 | 63 |
| PEO_LiTFSl | 75 | 55 | 55.1 | 73.5 | 36 |
| MP_HAL_22 (Al₂O₃ 10%) | 68 | 55 | 47.8 | 70.3 | 35 |
| MP_HAL_34 (real content of Al₂O₃ 6%) | 72 | 57 | 50.8 | 70.6 | 35 |
| MP_HAL_38 (real content of Al₂O₃ 8.9%) | 69 | 60 | 63.9 | 92.6 | 45 |

In the molten state, the polymer chains are free to move and can efficiently favor the transport of Li⁺ cations between the two electrodes. Under these conditions, the added inorganic charges, having a non-conductive nature, act as an obstacle preventing the transport of ions, thus decreasing the ionic conductivity. Nevertheless, the superficial functionalization with polymer chains favors the compatibilization of the nanoparticles with the conductive matrix, improving the conductivity with respect to the electrolytes containing bare Al₂O₃ nanoparticles, i.e. without functionalizing. The solid electrolyte showing the most similar ionic conductivity to the polymer solid electrolyte without nanoparticles (PEO_LiTFSI) is MP_HAL_34, which combines a high inorganic content. The solid electrolyte MP_HAL_34 has a good affinity with the organic medium due to the presence of chains with flexible PEG brushes. The MP_HAL_32 and MP_HAL_33 solid electrolytes also show an improved conductivity with regard to the solid electrolytes with the same amount of bare Al₂O₃ nanoparticles.

The conductivity of electrolytes at lower temperatures (40 °C and 50 °C) is reported in graph B of Figure 1. At these temperatures, all the electrolytes are around or below their melting temperature, which implies less mobility of the polymer chains and a reduction of the ionic conductivity. The results obtained demonstrate how the functionalization of the Al₂O₃ nanoparticles with pendant PEG brushes considerably improves the conductivity at 50 °C, compared to the electrolyte without inorganic nanoparticles (PEO_LiTFSI). Under these conditions, the presence of high molecular weight polymers with short and amorphous PEG chains (i.e. pendant polymer brushes) is the key to guarantee high matrix flexibility and good ionic conductivity. However, the simple presence of short chains of PEG anchored on the surface (i.e. linear PEG chains) as in the case of MP_HAL_38 does not significantly improve the conductivity compared to the electrolyte without charges.

This effect is outlined by the results shown in Table 3 below (see also Figure 2), which shows the conductivity between 80 °C and 30 °C of solid electrolytes with 10 wt% Al₂O₃ nanoparticles without functionalization (MP_HAL_22, real content 10 wt% of alumina), with Al₂O₃ functionalized with radial PEG (MP_HAL_38, real content 8.9 wt% of alumina) and Al₂O₃ functionalized with pendant PEG brushes (MP_HAL_34, real content 6 wt% of alumina).

**Table 3**

| Solid electrolyte | Ionic conductivity, S/cm | | | | | |
|---|---|---|---|---|---|---|
| | 80°C | 70°C | 60°C | 50° C | 40°C | 30°C |
| PEO_LiTFSl | 1.03E-03 | 6.51E-04 | 5.02E-04 | 1.40E-04 | 5.59E-05 | 1.19E-05 |
| MP_HAL_22 | 3.86E-04 | 3.19E-04 | 1.29E-04 | 9.40E-05 | 2.66E-05 | 1.10E-05 |
| MP_HAL_34 | 8.77E-04 | 6.47E-04 | 4.61E-04 | 2.34E-04 | 7.26E-05 | 2.28E-05 |
| MP_HAL_38 | 5.64E-04 | 4.58E-04 | 3.24E-04 | 1.50E-04 | 3.65E-05 | 1.05E-05 |

As already mentioned above, the functionalization with pendant PEG brushes seems to be the key for the improved conductivity.

### Thermal stability test

The thermogravimetric analysis (TGA) of Al₂O₃ functionalized with pendant PEG brushes (Table 4) provides evidence of the excellent thermal stability of the system containing functionalized alumina. It has been registered a loss of 5 wt% (T₅) and 10 wt% (T₁₀) with respect to the initial weight at a temperature above 250 °C and 300 °C, respectively. The maximum degradation temperature (DTA maximum) is around 400 °C.

**Table 4**

| Solid Electrolyte | T₅ (°C) | T₁₀ (°C) | DTA maximum (°C) |
|---|---|---|---|
| PEO_LiTFSl | 390 | 405 | 445 |
| MP_HAL_22 (Al₂O₃ 10%) | 376 | 396 | 423 |
| MP_HAL_34 (real content of Al₂O₃ 6%) | 265 | 340 | 400 |
| MP_HAL_38 (real content of Al₂O₃ 8.9%) | 353 | 371 | 396 |

### Mechanical stability test

In order to see whether the high percentage of organic amorphous fraction in Al₂O₃ functionalized with pendant PEG brushes could affect the function of the inorganic charge acting as mechanical reinforcement, hardness of different solid electrolytes was evaluated by the Shore test. Thus, the resistance to the puncture (Shore) at room temperature (25 °C) and at the working temperature of the electrolyte in the battery (60 °C) of the solid electrolytes was measured and the results are shown in Table 5 below.

**Table 5**

| Solid electrolyte | 25°C | 60°C |
|---|---|---|
| PEO_LiTFSl | 31 | 15 |
| MP_HAL_22 (real content: 10 wt% of alumina) | 69 | 40 |
| MP_HAL_34 (real content: 6 wt% of alumina) | 41 | 20 |

The results show how, in general, the presence of inorganic nanoparticles improves the mechanical properties of the electrolyte. Surprisingly, even with lower content of inorganic nanoparticles, the electrolyte containing the nanoparticles functionalized with pending PEG brushes have good mechanical properties at both temperatures. This guarantees greater safety by disadvantaging the growth of lithium dendrites.

Thus, although it could be expected that by introducing a higher polymer density around the particle certain properties of the electrolyte, such as the mechanical properties, could be damaged, the mentioned properties were not affected.

### Example 4 - Preparation of a battery with solid electrolyte

A battery comprising the following elements was prepared:
- the solid electrolyte prepared as disclosed in Example 2;
- a lithium metal negative electrode; and
- a positive electrode.

The positive electrode was prepared using a 75 wt% of carbon coated LiFePO₄ material (PA30, Clariant), 5 wt% of conductive additive C-ENERGY Super C45 carbon black (IMERYS Carbon & Graphite), and 20 wt% of solid electrolyte consisting of PEO (Mn 4·10⁵ g·mol⁻¹, Aldrich), and LiTFSI (99%, Solvionic). The amount of LiTFSI salt was chosen in order to obtain a molar ratio EO/Li equal to 20. First of all, acetonitrile based cathodic slurry with abovementioned formulation was prepared using high shear rate dissolver LC-30 (Dispermat). Then, the prepared slurry was casted on a battery-grade carbon-coated 20 µm aluminium foil current collector and dried in a convection oven at 60 °C during 15 minutes until complete acetonitrile evaporation. The target loading level of the cathode was set at 0.65 mAh/cm² (5.2 mg of LiFePO₄ per square centimetre). Afterwards, the manufactured positive electrode was calendered at room temperature by a laboratory hydraulic roll calender (DPM Solutions, Canada) up to a density of 2.0±0.1 g/cm³. Finally, before solid state battery assembly, the LiFePO₄ cathode was dried in a vacuum oven situated in a dry room for 16 hours at 55 °C.

The following secondary lithium metal batteries were assembled:
- coin cells (2 mAh); and
- pouch cells (500 mAh).

### Example 5 - Characterization of solid-state cells (coin and pouch)

Cyclability of coin and pouch cells with different solid electrolytes prepared as in Example 4 was assessed. Pouch cells had a nominal capacity of 0.5 Ah.

Figure 3 shows the results obtained in the cyclability tests carried out on coin cells.

In Figure 3a, it is shown how the coin cells with the four solid electrolytes have almost the same value of discharge capacity (Q). However, the cell with the solid electrolyte MP-HAL-34 has a much more stable and high coulombic efficiency (CE) during cycling compared with the other cells (Figure 3b).

The preparation of 0.5 Ah pouch cells with completely solid electrolytes, the pouch cells being capable of cycling at relatively high charge-discharge rates, is in itself a successful and ambitious result. Pouch cells manufactured with homogeneous and thin membranes of MP_HAL_34 as a solid electrolyte were provided with a very good, stable and reproducible electrochemical performance.

Thus, the pouch cells prepared with MP_HAL_34 were tested in extreme conditions, namely at relatively high charge and discharge C-rates, under which this kind of cells suffer greater degradation and lose electrochemical performance more quickly. The results obtained of the cyclability tests are depicted in Figure 4. As can be seen, a pouch cell having a solid electrolyte of PEO + LiTFSI + nano-Al₂O₃ functionalized with pendant PEG brushes (MP_HAL_34) has a high (> 99.8%) and stable coulombic efficiency, a result that supports the remarkable progress achieved in this technology.

### Citation List

1. Mondini, et al., "PEBBLES and PEBBLEJUGGLER: software for accurate, unbiased, and fast measurement and analysis of nanoparticle morphology from transmission electron microscopy (TEM) micrographs", Nanoscale, 2012, 4, 5356-5372.
2. Gregory, A., Stenzel, M. H." Complex polymer architectures via RAFT polymerization: From fundamental process to extending the scope using click chemistry and nature's building blocks", Progress in Polymer Science, 2012, Vol. 37(1), pp. 38-105
3. M.A. Neouze et al. "Surface Modification and Functionalization of Metal and Metal Oxide Nanoparticles by Organic Ligands", Monatsh Chem, 2008, Vol. 139, pp. 183-195.

## Claims

1. A functionalized metal oxide nanoparticle, which is a metal oxide nanoparticle having a surface with an organic moiety linked thereto,
wherein the organic moiety comprises pendant polymer brushes linked to an organosilane moiety which is anchored to the metal oxide nanoparticle,
wherein the metal oxide is selected from the group consisting of Al₂O₃, SiO₂, ZrO₂, TiO₂, MgO, ZnO, BaO, SrO, CaO, and Li₇La₃Zr₂O₁₂;
wherein the polymer forming the polymer brushes is an ion conducting polymer capable to solvate and dissociate an amount of lithium salt such that an ionic conductivity from 1·10⁻² S·cm⁻¹ to 1·10⁻⁹ S·cm⁻¹ at room temperature is obtained; and
wherein the organic moiety linked to the metal oxide nanoparticle is in an amount of up to a 40 wt% with respect to the amount of functionalized nanoparticle.

2. The functionalized metal oxide nanoparticle according to claim 1, wherein at least one of the pendant polymer brushes is linked to at least two organosilane moieties, each one of the organosilane moieties being anchored to a different metal oxide nanoparticle.

3. The functionalized metal oxide nanoparticle according to claims 1 or 2, which is represented by a structure of formula (I): 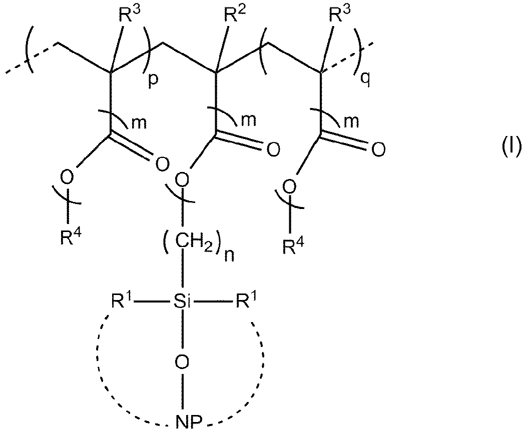 wherein NP is a metal oxide nanoparticle, wherein the metal oxide is selected from the group consisting of Al₂O₃, SiO₂, ZrO₂, TiO₂, MgO, ZnO, BaO, SrO, CaO, and Li₇La₃Zr₂O₁₂;
R¹ is independently radical selected from (C₁-C₄)alkoxy and -CI, or alternatively, is a biradical which is -O- attached to the nanoparticle, and the dashed line (- - - -) means a bond when R1 is a biradical;
R² and R³ are independently selected from -CH₃ and -H;
R⁴ is an ion conducting polymer chain, wherein the ion conducting polymer is a polymer capable to solvate and dissociate an amount of lithium salt such that an ionic conductivity from 1·10⁻² S·cm⁻¹ to 1·10⁻⁹ S·cm⁻¹ at room temperature is obtained;
n is an integer from 0 to 8; m is independently selected from an integer from 0 to 1; and
q and p are equal or different and are such that the organic moiety in the final functionalized metal oxide nanoparticle is in an amount from 10 wt% to 40 wt% with respect to the amount of functionalized nanoparticle; and
wherein the functionalized metal oxide nanoparticle represented by formula (I) has one or more anchored organosilane moieties to which pendant polymer brushes are linked.

4. The functionalized metal oxide nanoparticle according to claim 3, wherein the metal oxide is Al₂O₃, the R¹ is methoxy or a biradical which is -O- attached to the nanoparticle, R² is -CH₃, R³ is -H, n is 3; m is 1.

5. The functionalized metal oxide nanoparticle according to any one of claims 1 to 4, wherein the ion conducting polymer is selected from the group consisting of poly(ethylene oxide); poly(propylene oxide); a poly(ionic liquid) composed by a quaternary amine, a pyrrolidinium or an imidazolium cation coordinated with a bis(trifluoromethane)sulfonimide (TFSI)⁻ or a bis(fluorosulfonyl)imide (FSI)⁻ anion; a polyalkylencarbonate, and mixtures thereof, and copolymers thereof.

6. The functionalized metal oxide nanoparticle according to any one of claims 1 to 4, wherein the ion conducting polymer is selected from poly(ethylene oxide) and poly(propylene oxide).

7. The functionalized metal oxide nanoparticle according to any one of claims 1 to 5, wherein the amount of organic moiety linked to the metal oxide nanoparticle is from 20 to 40 wt% with respect to the amount of functionalized nanoparticle.

8. A process for preparing a functionalized metal oxide nanoparticle as defined in any one of claims 1 to 7, the process comprising:
i) reacting a bare metal oxide nanoparticle with an organosilane compound having a reactive functional group of formula (II): 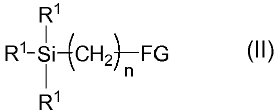 wherein
R¹ is independently selected from (C₁-C₄)alkoxy, -CI;
n is an integer from 0 to 8; and
FG is a functional group selected from the group consisting of acrylate, methacrylate, and vinyl,
in the presence of a polar solvent, in order to obtain a silanized metal oxide nanoparticle having a surface with a reactive functional group attached to it, wherein the metal oxide is selected from the group consisting of Al₂O₃, SiO₂, ZrO₂, TiO₂, MgO, ZnO, BaO, SrO, CaO, and Li₇La₃Zr₂O₁₂; and
ii) subjecting an ion conductive polymer having a polymerizable functional group suitable for radical polymerization attached thereto to a radical polymerization in the presence of a radical initiator and the silanized metal oxide nanoparticle obtained in step i), in the presence of a polar solvent, in order to obtain a functionalized metal oxide nanoparticle as defined in claims 1 to 6, wherein the organic moiety linked to the metal oxide nanoparticle is in an amount of up to a 40 wt% with respect to the amount of functionalized nanoparticle; and
wherein the ion conductive polymer is capable to solvate and dissociate an amount of lithium salt such that an ionic conductivity from 1·10⁻² S·cm⁻¹ to 1·10⁻⁹ S·cm⁻¹ at room temperature is obtained.

9. The process according to claim 8, wherein the radical initiator is free in solution.

10. The process according to claims 8 or 9, wherein the ion conductive polymer is selected from poly(ethylene oxide); poly(propylene oxide); a poly(ionic liquid) composed by a quaternary amine, a pyrrolidinium or an imidazolium cation coordinated with a bis(trifluoromethane)sulfonimide (TFSI⁻) or a bis(fluorosulfonyl)imide (FSI⁻) anion; a polyalkylencarbonate; and mixtures thereof, and copolymers thereof;
and the polymerizable functional group suitable for radical polymerization is selected from the group consisting of methacrylate, acrylate, and vinyl.

11. The process according to claims 8 or 9, wherein the ion conductive polymers having a polymerizable functional group suitable for radical polymerization attached thereto is selected from the group consisting of poly(ethylene glycol) methyl ether acrylate (PEGMEA), poly(ethylene glycol) methyl ether methacrylate (PEGMEMA), N,N,N,N-butyldimethylmethacryloyloxiethylammonium bis(trifluoromethylsulfonyl)imide, 3-ethyl-1-vinylimidazolium bis(trifluoromethylsulfonyl)imide, 3-ethyl-1-vinylimidazolium bis(fluoromethylsulfonyl)imide.

12. The process according to any one of claims 8 to 11, wherein the amount of organic moiety linked to the functionalized metal oxide nanoparticle is from 10 wt% to 40 wt% with respect to the amount of functionalized nanoparticle.

13. The process according to any one of claims 8 to 12, wherein the organosilane having a polymerizable moiety is selected from the group consisting of (trimethoxysilyl)propyl methacrylate, (trimethoxysilyl)propyl acrylate, allyltrichlorosilane, trichlorovinylsilane, allyltriethoxysilane, allyltrimethoxysilane, diethoxy(methyl)vinylsilane, dimethoxymethylvinylsilane, octenyltrichlorosilane, 3-(trichlorosilyl)propyl methacrylate, triethoxyvinylsilane, trimethoxy(7-octen-1-yl)silane, and vinyltrimethoxysilane.

14. A solid electrolyte comprising:
- a functionalized metal oxide nanoparticle as defined in any one of claims 1 to 7;
- a lithium salt as a source of lithium ions; and
- an ionic conductive polymer matrix.

15. The solid electrolyte according to claim 14, wherein the metal oxide nanoparticle is in an amount from 0.5 wt% to 20 wt% with respect to the total amount of functionalized metal oxide nanoparticles, lithium salt, and ionic conductive polymer.

16. A positive electrode comprising an ionic conductive binder that comprises a functionalized metal oxide nanoparticle as defined in any one of claims 1 to 7 and an ionic conductive polymer matrix.

17. A lithium battery comprising:
a) a negative electrode;
b) a positive electrode; and
c) a solid electrolyte as defined in any one of claims 14 to 15 interposed between the negative electrode and the positive electrode.

## Patentansprüche

1. Ein funktionalisiertes Metalloxid-Nanopartikel, welches ein Metalloxid-Nanopartikel ist, das eine Oberfläche mit einer daran gebundenen organischen Einheit hat,
wobei die organische Einheit anhängende Polymerbürsten umfasst, die mit einer Organosilaneinheit verbunden sind, welche an dem Metalloxid-Nanopartikel verankert ist,
wobei das Metalloxid ausgewählt ist aus der Gruppe bestehend aus Al₂O₃, SiO₂, ZrO₂, TiO₂, MgO, ZnO, BaO, SrO, CaO, und Li₇La₃Zr₂O₁₂;
wobei das Polymer, das die Polymerbürsten bildet, ein ionenleitendes Polymer ist, das fähig ist, eine solche Menge an Lithiumsalz zu solvatisieren und zu dissoziieren, dass eine lonenleitfähigkeit von 1·10⁻² S·cm⁻¹ bis 1·10⁻⁹ S·cm⁻¹ bei Raumtemperatur erhalten wird; und
wobei die an das Metalloxid-Nanopartikel gebundene organische Einheit in einer Menge von bis zu 40 Gew.-% in Bezug auf die Menge an funktionalisiertem Nanopartikel vorliegt.

2. Das funktionalisierte Metalloxid-Nanopartikel nach Anspruch 1, wobei mindestens eine der anhängenden Polymerbürsten mit mindestens zwei Organosilaneinheiten verbunden ist, wobei jede der Organosilaneinheiten an einem verschiedenen Metalloxid-Nanopartikel verankert ist.

3. Das funktionalisierte Metalloxid-Nanopartikel nach Anspruch 1 oder 2, welches durch eine Struktur der Formel (I) dargestellt wird: 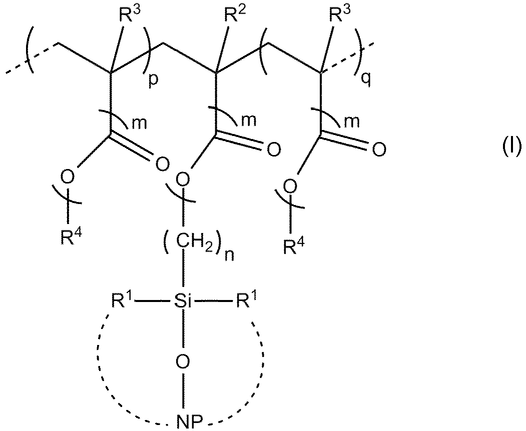 wobei NP ein Metalloxid-Nanopartikel ist, wobei das Metalloxid ausgewählt ist aus der Gruppe bestehend aus Al₂O₃, SiO₂, ZrO₂, TiO₂, MgO, ZnO, BaO, SrO, CaO, und
Li₇La₃Zr₂O₁₂;
R¹ ein unabhängiger Rest ist, das ausgewählt ist aus (C₁-C₄)Alkoxy und -Cl oder, alternativ, ein Biradikal ist, das -O- an das Nanopartikel gebunden ist, und die gestrichelte Linie (- - - -) eine Bindung bedeutet, wenn R1 ein Biradikal ist;
R² und R³ unabhängig aus -CH₃ und -H ausgewählt sind;
R⁴ eine ionenleitende Polymerkette ist, wobei das ionenleitende Polymer ein Polymer ist, das fähig ist, eine solche Menge an Lithiumsalz zu solvatisieren und zu dissoziieren, dass eine lonenleitfähigkeit von 1·10⁻² S·cm⁻¹ bis 1·10⁻⁹ S·cm⁻¹ bei Raumtemperatur erhalten wird;
n eine ganze Zahl von 0 bis 8 ist; m unabhängig ausgewählt ist aus einer ganzen Zahl von 0 bis 1; und
q und p gleich oder verschieden sind und derart sind, dass die organische Einheit in dem endgültigen funktionalisierten Metalloxid-Nanopartikel in einer Menge von 10 Gew.-% bis 40 Gew.-% in Bezug auf die Menge an funktionalisiertem Nanopartikel vorliegt; und
wobei das durch Formel (I) dargestellte funktionalisierte Metalloxid-Nanopartikel eine oder mehrere verankerte Organosilaneinheiten aufweist, an die anhängende Polymerbürsten gebunden sind.

4. Das funktionalisierte Metalloxid-Nanopartikel nach Anspruch 3, wobei das Metalloxid Al₂O₃ ist, R¹ Methoxy oder ein Biradikal ist, das -O- an das Nanopartikel gebunden ist, R² = -CH₃, R³ = -H, n = 3; m = 1 ist.

5. Das funktionalisierte Metalloxid-Nanopartikel nach einem der Ansprüche 1 bis 4, wobei das ionenleitende Polymer ausgewählt ist aus der Gruppe bestehend aus Polyethylenoxid; Polypropylenoxid; einer Poly(ionischen Flüssigkeit), zusammengesetzt aus einem quaternären Amin, einem Pyrrolidinium- oder einem Imidazoliumkation, koordiniert mit einem Bis(trifluormethan)sulfonimid (TFSI)⁻- oder einem Bis(fluorsulfonyl)imid (FSI)⁻-Anion; einem Polyalkylencarbonat und Mischungen davon und Copolymeren davon.

6. Das funktionalisierte Metalloxid-Nanopartikel nach einem der Ansprüche 1 bis 4, wobei das ionenleitende Polymer ausgewählt ist aus Polyethylenoxid und Polypropylenoxid.

7. Das funktionalisierte Metalloxid-Nanopartikel nach einem der Ansprüche 1 bis 5, wobei die Menge an organischer Einheit, die an das Metalloxid-Nanopartikel gebunden ist, von 20 bis 40 Gew.-% in Bezug auf die Menge an funktionalisiertem Nanopartikel beträgt.

8. Ein Verfahren zur Herstellung eines funktionalisierten Metalloxid-Nanopartikels wie in einem der Ansprüche 1 bis 7 definiert, wobei das Verfahren Folgendes umfasst:
i) Umsetzen eines bloßen Metalloxid-Nanopartikels mit einer Organosilanverbindung, die eine reaktive funktionelle Gruppe der Formel (II) hat: 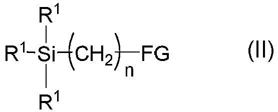 wobei
R¹ unabhängig aus (C₁-C₄)-Alkoxy, -Cl ausgewählt ist;
n eine ganze Zahl von 0 bis 8 ist; und
FG eine funktionelle Gruppe ausgewählt aus der Gruppe bestehend aus Acrylat, Methacrylat und Vinyl, ist
in Gegenwart eines polaren Lösungsmittels, um ein silanisiertes Metalloxid-Nanopartikel zu erhalten, das eine Oberfläche mit einer daran gebundenen reaktiven funktionellen Gruppe aufweist, wobei das Metalloxid ausgewählt ist aus der Gruppe bestehend aus Al₂O₃, SiO₂, ZrO₂, TiO₂, MgO, ZnO, BaO, SrO, CaO, und Li₇La₃Zr₂O₁₂; und
ii) Unterziehen eines ionenleitfähigen Polymers mit einer daran gebundenen polymerisierbaren funktionellen Gruppe, die für eine radikalische Polymerisation geeignet ist, einer radikalischen Polymerisation in Gegenwart eines Radikalstarters und des in Schritt i) erhaltenen silanisierten Metalloxid-Nanopartikels in Gegenwart eines polaren Lösungsmittels, um ein funktionalisiertes Metalloxid-Nanopartikel wie in den Ansprüchen 1 bis 6 definiert zu erhalten, wobei die organische Einheit, die an das Metalloxid-Nanopartikel gebunden ist, in einer Menge von bis zu 40 Gew.-% in Bezug auf die Menge des funktionalisierten Nanopartikels vorliegt; und
wobei das ionenleitfähige Polymer fähig ist, eine solche Menge an Lithiumsalz zu solvatisieren und zu dissoziieren, dass eine lonenleitfähigkeit von 1·10⁻² S·cm⁻¹ bis 1·10⁻⁹ S·cm⁻¹ bei Raumtemperatur erhalten wird.

9. Das Verfahren nach Anspruch 8, wobei der Radikalstarter frei in Lösung vorliegt.

10. Das Verfahren nach Anspruch 8 oder 9, wobei das ionenleitfähige Polymer ausgewählt ist aus Polyethylenoxid; Polypropylenoxid; einer Poly(ionischen Flüssigkeit), zusammengesetzt aus einem quaternären Amin, einem Pyrrolidinium- oder einem Imidazoliumkation, koordiniert mit einem Bis(trifluormethan)sulfonimid (TFSI⁻)- oder einem Bis(fluorsulfonyl)imid (FSI⁻)-Anion; einem Polyalkylencarbonat; und Mischungen davon und Copolymeren davon;
und die für radikalische Polymerisation geeignete polymerisierbare funktionelle Gruppe ausgewählt ist aus der Gruppe bestehend aus Methacrylat, Acrylat und Vinyl.

11. Das Verfahren nach den Ansprüchen 8 oder 9, wobei das ionenleitfähige Polymer mit einer daran gebundenen polymerisierbaren funktionellen Gruppe, die für eine Radikalpolymerisation geeignet ist, aus der Gruppe ausgewählt ist, die aus Poly(ethylenglykol)methyletheracrylat (PEGMEA), Poly(ethylenglykol)methylethermethacrylat (PEGMEMA), N,N,N,N-Butyldimethylmethacryloyloxiethylammoniumbis(trifluormethylsulfonyl)imid, 3-Ethyl-1-Vinylimidazoliumbis(trifluormethylsulfonyl)imid, 3-Ethyl-1-Vinylimidazoliumbis(fluormethylsulfonyl)imid besteht.

12. Das Verfahren nach einem der Ansprüche 8 bis 11, wobei die Menge an organischer Einheit, die mit dem funktionalisierten Metalloxid-Nanopartikel verbunden ist, von 10 Gew.-% bis 40 Gew.-% in Bezug auf die Menge an funktionalisiertem Nanopartikel beträgt.

13. Das Verfahren nach einem der Ansprüche 8 bis 12, wobei das Organosilan, das eine polymerisierbare Einheit hat, ausgewählt ist aus der Gruppe bestehend aus (Trimethoxysilyl)propylmethacrylat, (Trimethoxysilyl)propylacrylat, Allyltrichlorsilan, Trichlorvinylsilan, Allyltriethoxysilan, Allyltrimethoxysilan, Diethoxy(methyl)vinylsilan, Dimethoxymethylvinylsilan, Octenyltrichlorsilan, 3-(Trichlorsilyl)propylmethacrylat, Triethoxyvinylsilan, Trimethoxy(7-octen-1-yl)silan und Vinyltrimethoxysilan.

14. Ein Festelektrolyt umfassend:
- ein funktionalisiertes Metalloxid-Nanopartikel wie in einem der Ansprüche 1 bis 7 definiert;
- ein Lithiumsalz als Quelle für Lithiumionen; und
- eine ionenleitfähige Polymermatrix.

15. Das Festelektrolyt nach Anspruch 14, wobei das Metalloxid-Nanopartikel in einer Menge von 0,5 Gew.-% bis 20 Gew.-% in Bezug auf die Gesamtmenge an funktionalisierten Metalloxid-Nanopartikeln, Lithiumsalz und ionenleitfähigem Polymer vorhanden ist.

16. Eine positive Elektrode, die ein ionenleitfähiges Bindemittel umfasst, das ein funktionalisiertes Metalloxid-Nanopartikel wie in einem der Ansprüche 1 bis 7 definiert und eine ionenleitfähige Polymermatrix umfasst.

17. Eine Lithiumbatterie umfassend:
a) eine negative Elektrode;
b) eine positive Elektrode; und
c) einen Festelektrolyten wie in einem der Ansprüche 14 bis 15 definiert, der zwischen der negativen Elektrode und der positiven Elektrode angeordnet ist.

## Revendications

1. Une nanoparticule d'oxyde métallique fonctionnalisée, qui est une nanoparticule d'oxyde métallique ayant une surface avec un fragment organique liée à celle-ci,
dans laquelle le fragment organique comprend des brosses polymères pendantes liées à un fragment organosilane qui est ancré à la nanoparticule d'oxyde métallique,
dans laquelle l'oxyde métallique est choisi dans le groupe constitué de Al₂O₃, SiO₂, ZrO₂, TiO₂, MgO, ZnO, BaO, SrO, CaO, et Li₇La₃Zr₂O₁₂ ;
dans laquelle le polymère formant les brosses polymères est un polymère conducteur d'ions capable de solvater et de dissocier une quantité de sel de lithium telle qu'une conductivité ionique de 1·10⁻² S·cm⁻¹ à 1·10⁻⁹ S·cm⁻¹ à température ambiante est obtenue ; et
dans laquelle le fragment organique lié à la nanoparticule d'oxyde métallique est en une quantité allant jusqu'à 40 % en poids par rapport à la quantité de nanoparticule fonctionnalisée.

2. La nanoparticule d'oxyde métallique fonctionnalisée selon la revendication 1, dans laquelle au moins une des brosses polymères pendantes est liée à au moins deux fragments organosilanes, chacun des fragments organosilane étant ancré à une nanoparticule d'oxyde métallique différente.

3. La nanoparticule d'oxyde métallique fonctionnalisée selon la revendication 1 ou 2, qui est représentée par une structure de formule (I) : 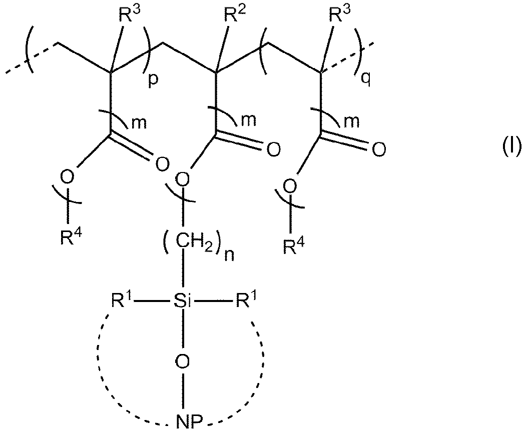 où NP est une nanoparticule d'oxyde métallique, où l'oxyde métallique est choisi dans le groupe constitué de Al₂O₃, SiO₂, ZrO₂, TiO₂, MgO, ZnO, BaO, SrO, CaO, et Li₇La₃Zr₂O₁₂ ;
R¹ est indépendamment un radical choisi parmi alcoxyle en (C₁-C₄) et -Cl ou, alternativement, est un biradical qui est -O- attaché à la nanoparticule, et la ligne pointillée (- - - -) signifie une liaison lorsque R1 est un biradical ;
R² et R³ sont choisis indépendamment parmi -CH₃ et -H ;
R⁴ est une chaîne polymère conductrice d'ions, où le polymère conducteur d'ions est un polymère capable de solvater et de dissocier une quantité de sel de lithium telle qu'une conductivité ionique de 1·10⁻² S·cm⁻¹ à 1·10⁻⁹ S·cm⁻¹ à température ambiante est obtenue;
n est un nombre entier allant de 0 à 8 ; m est choisi indépendamment parmi un nombre entier allant de 0 à 1 ; et
q et p sont égaux ou différents et sont tels que le fragment organique dans la nanoparticule d'oxyde métallique fonctionnalisée finale est en une quantité de 10 % en poids à 40 % en poids par rapport à la quantité de nanoparticule fonctionnalisée ; et
dans laquelle la nanoparticule d'oxyde métallique fonctionnalisée représentée par la formule (I) a un ou plusieurs fragments d'organosilane ancrés auxquels sont liées des brosses polymères pendantes.

4. La nanoparticule d'oxyde métallique fonctionnalisée selon la revendication 3, dans laquelle l'oxyde métallique est Al₂O₃, R¹ est méthoxyle ou un biradical qui est -O- attaché à la nanoparticule, R² est -CH₃, R³ est -H, n est 3; m est 1.

5. La nanoparticule d'oxyde métallique fonctionnalisée selon l'une quelconque des revendications 1 à 4, dans laquelle le polymère conducteur d'ions est choisi dans le groupe constitué de poly(oxyde d'éthylène) ; poly(oxyde de polypropylène) ; un poly(liquide ionique) composé d'une amine quaternaire, d'un cation pyrrolidinium ou imidazolium coordonné avec un anion bis(trifluorométhane)sulfonimide (TFSI)⁻ ou bis(fluorosulfonyl)imide (FSI)⁻ ; un polyalkylènecarbonate, et des mélanges de ceux-ci, et des copolymères de ceux-ci.

6. La nanoparticule d'oxyde métallique fonctionnalisée selon l'une quelconque des revendications 1 à 4, dans laquelle le polymère conducteur d'ions est choisi parmi le poly(oxyde d'éthylène) et le poly(oxyde de polypropylène).

7. La nanoparticule d'oxyde métallique fonctionnalisée selon l'une quelconque des revendications 1 à 5, dans laquelle la quantité de fragment organique liée à la nanoparticule d'oxyde métallique est de 20 à 40 % en poids par rapport à la quantité de nanoparticule fonctionnalisée.

8. Un procédé de préparation d'une nanoparticule d'oxyde métallique fonctionnalisée telle que définie dans l'une quelconque des revendications 1 à 7, le procédé comprenant :
i) faire réagir une nanoparticule d'oxyde métallique nue avec un composé organosilane ayant un groupe fonctionnel réactif de formule (II) : 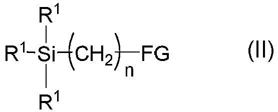 où
R¹ est choisi indépendamment parmi alcoxyle en (C₁-C₄), -Cl ;
n est un nombre entier de 0 à 8 ; et
FG est un groupe fonctionnel choisi dans le groupe constitué d'acrylate, méthacrylate et vinyle,
en présence d'un solvant polaire, afin d'obtenir une nanoparticule d'oxyde métallique silanisée ayant une surface à laquelle est attaché un groupe fonctionnel réactif, dans laquelle l'oxyde métallique est choisi dans le groupe constitué de Al₂O₃, SiO₂, ZrO₂, TiO₂, MgO, ZnO, BaO, SrO, CaO, et Li₇La₃Zr₂O₁₂ ; et
ii) soumettre un polymère conducteur d'ions auquel est attachée un groupe fonctionnel polymérisable apte à la polymérisation radicalaire à une polymérisation radicalaire en présence d'un amorceur radicalaire et de la nanoparticule d'oxyde métallique silanisée obtenue à l'étape i), en présence d'un solvant polaire, afin d'obtenir une nanoparticule d'oxyde métallique fonctionnalisée telle que définie dans les revendications 1 à 6, où le fragment organique lié à la nanoparticule d'oxyde métallique est en une quantité allant jusqu'à 40 % en poids par rapport à la quantité de nanoparticule fonctionnalisée ; et
dans lequel le polymère conducteur d'ions est capable de solvater et de dissocier une quantité de sel de lithium telle qu'une conductivité ionique de 1·10⁻² S·cm⁻¹ à 1·10⁻⁹ S·cm⁻¹ à température ambiante est obtenue.

9. Le procédé selon la revendication 8, dans lequel l'amorceur radicalaire est libre en solution.

10. Le procédé selon la revendication 8 ou 9, dans lequel le polymère conducteur d'ions est choisi parmi le poly(oxyde d'éthylène) ; le poly(oxyde de propylène); un poly(liquide ionique) composé d'une amine quaternaire, un cation pyrrolidinium ou imidazolium coordonné avec un anion bis(trifluorométhane)sulfonimide (TFSI)⁻ ou bis(fluorosulfonyl)imide (FSI)⁻ ; un polyalkylènecarbonate, et des mélanges de ceux-ci, et des copolymères de ceux-ci ;
et le groupe fonctionnel polymérisable apte à la polymérisation radicalaire est choisi dans le groupe constitué de méthacrylate, acrylate et vinyle.

11. Le procédé selon les revendications 8 ou 9, dans lequel le polymère conducteur d'ions auquel est attaché un groupe fonctionnel polymérisable apte à la polymérisation radicalaire est choisi dans le groupe constitué de poly(éthylène glycol méthyl éther) acrylate (PEGMEA), poly(éthylène glycol méthyl éther) méthacrylate (PEGMEMA), N,N,N,N- butyldiméthylméthacryloyloxiéthylammonium bis(trifluorométhylsulfonyl)imide, 3-éthyl-1-vinylimidazoliumbis(trifluorométhylsulfonyl)imide, 3-éthyl-1-vinylimidazoliumbis(fluorométhylsulfonyl)imide.

12. Le procédé selon l'une quelconque des revendications 8 à 11, dans lequel la quantité de fragment organique lié à la nanoparticule d'oxyde métallique fonctionnalisée est de 10 % en poids à 40 % en poids par rapport à la quantité de nanoparticule fonctionnalisée.

13. Le procédé selon l'une quelconque des revendications 8 à 12, dans lequel l'organosilane ayant un fragment polymérisable est choisi dans le groupe constitué de méthacrylate de (triméthoxysilyl)propyle, acrylate de (triméthoxysilyl)propyle, allyltrichlorosilane, trichlorovinylsilane, allyltriéthoxysilane, allyltriméthoxysilane, diéthoxy(méthyl)vinylsilane, diméthoxyméthylvinylsilane, octényltrichlorosilane, méthacrylate de 3-(trichlorosilyl)propyle, triéthoxyvinylsilane, triméthoxy(7-octène-1-yl)silane et vinyltriméthoxysilane.

14. Un électrolyte solide comprenant :
- une nanoparticule d'oxyde métallique fonctionnalisée telle que définie dans l'une quelconque des revendications 1 à 7 ;
- un sel de lithium comme source d'ions lithium ; et
- une matrice polymère conductrice d'ions.

15. L'électrolyte solide selon la revendication 14, dans lequel la nanoparticule d'oxyde métallique est en une quantité de 0,5 % en poids à 20 % en poids par rapport à la quantité totale de nanoparticules d'oxyde métallique fonctionnalisées, de sel de lithium et de polymère conducteur d'ions.

16. Une électrode positive comprenant un liant conducteur d'ions qui comprend une nanoparticule d'oxyde métallique fonctionnalisée telle que définie dans l'une quelconque des revendications 1 à 7 et une matrice polymère conductrice d'ions.

17. Une batterie au lithium comprenant :
a) une électrode négative ;
b) une électrode positive ; et
c) un électrolyte solide tel que défini dans l'une quelconque des revendications 14 à 15 interposé entre l'électrode négative et l'électrode positive.
